# EUROPEAN PATENT APPLICATION

(11) **EP 4 503 253 A1**
(43) Date of publication of application: **05.02.2025**
(21) Application number: 22934185.4
(22) Date of filing: 31.03.2022
(51) Int. Cl.: H01M 10/44, H01M 10/42, H01M 4/36, H01M 4/133, H01M 10/0525

(54) **ELECTROCHEMICAL APPARATUS AND CONTROL METHOD THEREFOR, AND ELECTROCHEMICAL APPARATUS MANAGEMENT SYSTEM, ELECTRONIC DEVICE AND MEDIUM**

(71) Applicant: Ningde Amperex Technology Limited, Ningde, Fujian 352100 (CN)
(72) Inventor: LONG, Xia, Ningde, Fujian 352100 (CN)
(74) Representative: Icosa
(86) International application number: PCT/CN2022/084414
(87) International publication number: WO 2023/184339

(57) **Abstract**

An electrochemical apparatus includes a negative electrode active material. The negative electrode active material of the electrochemical apparatus includes a first active material and a second active material, where the first active material has a gram capacity less than the second active material; the life cycle of the electrochemical apparatus includes N cycle sections arranged in chronological order, with N being an integer greater than or equal to 2; and for the i-th cycle section, a discharge capacity in a single discharge process in the i-th cycle section is denoted as Qᵢ, and a discharge capacity in a single discharge process in the (i+1)-th cycle section is denoted as Qᵢ₊₁, where Qᵢ > Qᵢ₊₁. The electrochemical apparatus have a long service life on the premise of increasing the volumetric energy density of the electrochemical apparatus.

## Description

### TECHNICAL FIELD

Some embodiments of this application relate to the field of electrochemical technologies, and particularly to an electrochemical apparatus and a control method therefor, an electrochemical apparatus management system, an electronic device, and a medium.

### BACKGROUND

With the widespread use of consumer electronics such as laptops, mobile phones, tablets, power banks, and drones, the requirements for electrochemical apparatuses within these products are becoming increasingly higher. The electrochemical apparatuses are not only required to be lightweight but also required to have a high volumetric energy density and a long service life. Secondary batteries like lithium-ion batteries and sodium-ion batteries are commonly used electrochemical apparatuses in consumer electronics. Silicon materials have a high reversible capacity, so silicon is considered to be the most promising negative electrode material for secondary batteries to further increase their volumetric energy density. However, silicon negative electrode materials undergo significant volume swelling during cycling, adversely affecting the service life of secondary batteries. Therefore, there is a need for a technical solution to make secondary batteries have a long service life on the premise of increasing the volumetric energy density of secondary batteries.

### SUMMARY

In view of this, some embodiments of this application provide an electrochemical apparatus and a control method therefor, an electronic device, and a medium, to make the electrochemical apparatus have a long service life on the premise of increasing the volumetric energy density of the electrochemical apparatus.

According to a first aspect of this application, an electrochemical apparatus is provided. A negative electrode active material of the electrochemical apparatus includes a first active material and a second active material, where the first active material has a gram capacity less than the second active material; the electrochemical apparatus includes N cycle sections arranged in chronological order, where N is an integer greater than or equal to 2, and each cycle section includes at least one charge-discharge cycle of the electrochemical apparatus; and for the i-th cycle section of the first to (N-1)-th cycle sections, a discharge capacity in a single discharge process in the i-th cycle section is denoted as Qᵢ, and a discharge capacity in a single discharge process in the (i+1)-th cycle section is denoted as Qᵢ₊₁, where Qᵢ > Qᵢ₊₁, and 1 ≤ i < N or 1 < i ≤ (N-1).

In some embodiments, the i-th cycle section includes at least two charge-discharge cycles of the electrochemical apparatus; and for the j-th charge-discharge cycle and the (j+1)-th charge-discharge cycle included in a same cycle section, with j being an integer greater than or equal to 1, a discharge cut-off voltage of the electrochemical apparatus in the j-th charge-discharge cycle is denoted as Vⱼ, and a discharge cut-off voltage of the electrochemical apparatus in the (j+1)-th charge-discharge cycle is denoted as Vⱼ₊₁, where Vⱼ > Vⱼ₊₁.

In some embodiments, the electrochemical apparatus satisfies at least one of conditions: a mass percentage of the second active material in the negative electrode active material is in the range of (0%, 10%], and a value range for the number of charge-discharge cycles included in the i-th cycle section is [100, 200]; or a mass percentage of the second active material in the negative electrode active material is in the range of (10%, 60%], and a value range for the number of charge-discharge cycles included in the i-th cycle section is [10, 100).

In some embodiments, the electrochemical apparatus satisfies at least one of conditions: the mass percentage of the second active material in the negative electrode active material is in the range of (0%, 10%], and 0.02C ≤ Qᵢ - Qᵢ₊₁ ≤ 0.1C, where C is an initial capacity of the electrochemical apparatus; or the mass percentage of the second active material in the negative electrode active material is in the range of (10%, 60%], and 0.005C ≤ Qᵢ - Qᵢ₊₁ ≤ 0.02C.

In some embodiments, for the i-th cycle section of the first to (N-1)-th cycle sections, the electrochemical apparatus performs charge-discharge cycles with Qᵢ until the discharge cut-off voltage of the electrochemical apparatus is less than the voltage threshold, or the number of charge-discharge cycles reaches the number of charge-discharge cycles included in the i-th cycle section, then the electrochemical apparatus starts performing charge-discharge cycles with Qᵢ₊₁.

In some embodiments, the first active material includes graphite, and the second active material includes silicon.

In some embodiments, a mass percentage of silicon in the negative electrode active material of the electrochemical apparatus is within [10%, 20%].

According to a second aspect of an embodiment of this application, a control method for electrochemical apparatus is provided, for controlling the charge-discharge process of the electrochemical apparatus. A negative electrode active material of the electrochemical apparatus includes a first active material and a second active material, where the first active material has a gram capacity less than the second active material; the electrochemical apparatus includes N cycle sections arranged in chronological order, where N is an integer greater than or equal to 2, and each cycle section includes at least one charge-discharge cycle of the electrochemical apparatus. The control method for electrochemical apparatus includes: controlling the electrochemical apparatus to perform charge-discharge cycles in the i-th cycle section of the first to (N-1)-th cycle sections with a discharge capacity of Qᵢ in a single discharge process; and controlling the electrochemical apparatus to perform charge-discharge cycles in the (i+1)-th cycle section with a discharge capacity of Qᵢ₊₁ in a single discharge process, where Qᵢ > Qᵢ₊₁.

In some embodiments, the control method for electrochemical apparatus includes: for the j-th charge-discharge cycle and the (j+1)-th charge-discharge cycle comprised in a same cycle section, with j being an integer greater than or equal to 1, controlling a discharge cut-off voltage of the electrochemical apparatus in the j-th charge-discharge cycle to be Vⱼ and a discharge cut-off voltage of the electrochemical apparatus in the (j+1)-th charge-discharge cycle to be Vⱼ₊₁, wherein Vⱼ > Vⱼ₊₁.

In some embodiments, for the N-th cycle section, it may include one or more charge-discharge cycles. When multiple charge-discharge cycles are included, the parameter relationship settings of each charge-discharge cycle may be similar to the parameter relationship settings of multiple charge-discharge cycles in the i-th cycle section. Alternatively, in some embodiments, in the N-th cycle section, the electrochemical apparatus does not operate. For example, due to safety concerns related to the electrochemical state or degradation of charge and discharge performance, the electrochemical apparatus is no longer suitable for use, and the use of the electrochemical apparatus stops.

In some embodiments, the control method for electrochemical apparatus includes: S1: for the i-th cycle section of the first to (N-1)-th cycle sections, controlling the electrochemical apparatus to perform charge-discharge cycles with Qi; S2: determining whether the number of charge-discharge cycles performed by the electrochemical apparatus with Qᵢ equals the number of charge-discharge cycles included in the i-th cycle section; if yes, executing S3, otherwise executing S4; S3: controlling the electrochemical apparatus to start performing charge-discharge cycles with Qᵢ₊₁; and S4: determining whether the discharge cut-off voltage of the electrochemical apparatus when performing charge-discharge cycles with Qᵢ is less than a voltage threshold; if yes, executing S3, otherwise executing S1.

In some embodiments, the first active material includes graphite, and the second active material includes silicon.

In some embodiments, a mass percentage of silicon in the negative electrode active material of the electrochemical apparatus is within [10%, 20%].

According to a third aspect of an embodiment of this application, an electrochemical apparatus management system is provided. The electrochemical apparatus management system is connected to an electrochemical apparatus, and the electrochemical apparatus management system is configured to execute the control method for electrochemical apparatus according to the second aspect or any one of the possible implementations of the second aspect.

According to a fourth aspect of an embodiment of this application, an electronic device is provided, including the electrochemical apparatus according to the first aspect or any possible implementation of the first aspect, or including the electrochemical apparatus management system according to the third aspect.

According to a fifth aspect of an embodiment of this application, a computer-readable storage medium is provided. The computer-readable storage medium has stored thereon a computer program, and when the computer program is run by a processor, the control method for electrochemical apparatus according to the second aspect or any one of the possible implementations of the second aspect is implemented.

As can be seen from the above technical solutions, since the gram capacity of the second active material is greater than that of the first active material, the swelling rate of the second active material during the cycling of the electrochemical apparatus is greater than that of the first active material; and the life cycle of the electrochemical apparatus is divided into multiple cycle sections. The fixed capacity discharge is performed in each cycle section, and the discharge capacity is stepwise decreased in chronological order for each cycle section. In the early stage of the life cycle of the electrochemical apparatus, the first active material is mainly used for the discharge, and as the cycle decay progresses, the second active material is gradually activated, allowing the second active material to be used for shallow discharge and reducing the volume swelling of the electrochemical apparatus caused by the swelling of the second active material. Thus, this improves the cycling performance of the electrochemical apparatus and extends the service life, making the electrochemical apparatus have a long service life on the premise of increasing the volumetric energy density of the electrochemical apparatus.

### BRIEF DESCRIPTION OF DRAWINGS

To describe the technical solutions in embodiments of this application or in the prior art more clearly, the following briefly describes accompanying drawings required for description in the embodiments or the prior art. Apparently, the accompanying drawings in the following descriptions show merely some embodiments recited in the embodiments of this application, and persons of ordinary skill in the art may still derive other drawings from these accompanying drawings.
FIG. 1 is a flowchart of a control method for electrochemical apparatus according to one embodiment of this application;
FIG. 2 is a flowchart of a cycle section switching method according to one embodiment of this application;
FIG. 3 is a curve of the remaining capacity retention rate of a lithium-ion battery in Comparative example 1 of this application as a function of the number of cycles;
FIG. 4 is a curve of the capacity of a lithium-ion battery in Comparative example 1 of this application as a function of the number of cycles;
FIG. 5 is a curve of the remaining energy percentage of a lithium-ion battery in Comparative example 1 of this application as a function of the number of cycles;
FIG. 6 is a curve of the energy of a lithium-ion battery in Comparative example 1 of this application as a function of the number of cycles;
FIG. 7 is a curve of the remaining capacity retention rate of a lithium-ion battery in Experimental example 1 of this application as a function of the number of cycles;
FIG. 8 is a curve of the capacity of a lithium-ion battery in Experimental example 1 of this application as a function of the number of cycles;
FIG. 9 is a curve of the remaining energy percentage of a lithium-ion battery in Experimental example 1 of this application as a function of the number of cycles;
FIG. 10 is a curve of the energy of a lithium-ion battery in Experimental example 1 of this application as a function of the number of cycles;
FIG. 11 is a curve of the remaining capacity retention rate of a lithium-ion battery in Experimental example 2 of this application as a function of the number of cycles;
FIG. 12 is a curve of the capacity of a lithium-ion battery in Experimental example 2 of this application as a function of the number of cycles;
FIG. 13 is a curve of the remaining energy percentage of a lithium-ion battery in Experimental example 2 of this application as a function of the number of cycles;
FIG. 14 is a curve of the energy of a lithium-ion battery in Experimental example 2 of this application as a function of the number of cycles;
FIG. 15 is a curve of the remaining capacity retention rate of the lithium-ion batteries in Comparative example 1, Experimental example 1, and Experimental example 2 of this application as a function of the number of cycles; and
FIG. 16 is a curve of the energy of the lithium-ion batteries in Comparative example 1, Experimental example 1, and Experimental example 2 of this application as a function of the number of cycles.

### DETAILED DESCRIPTION

To make persons skilled in the art understand the technical solutions in this application better, the following clearly and in detail describes the technical solutions in some embodiments of this application with reference to the accompanying drawings in the embodiments of this application. Apparently, the described embodiments are some rather than all embodiments of this application. All other embodiments obtained by persons of ordinary skill in the art based on the embodiments of this application shall fall within the protection scope of these embodiments of this application.

In the following description, an electrochemical apparatus and control method therefor, an electrochemical apparatus management system, an electronic device, and a storage medium in some embodiments of this application are first specifically described, then some relevant experimental examples and comparative examples of the electrochemical apparatus and control method therefor in some embodiments of this application will be given, to illustrate significant advantages of the electrochemical apparatus and control method therefor, the electrochemical apparatus management system, the electronic device, and the storage medium in these embodiments of this application over the prior art.

The following describes specific advantages of some embodiments of this application with reference to the accompanying drawings.

It should be noted that in the content of these embodiments of this application, a lithium-ion battery is used as an example of an electrochemical apparatus to explain this application. However, the electrochemical apparatus of this application is not limited to the lithium-ion battery.

### Electrochemical apparatus

Electrochemical apparatuses provide electric energy for consumer electronics such as laptops, mobile phones, tablets, power banks, and drones. A graphite negative electrode system is used in lithium-ion batteries, sodium-ion batteries, and the like. As the requirements for weight, volume, and endurance of electronic devices cannot be improved, the volumetric energy density of the electrochemical apparatus needs to be increased. However, the graphite negative electrode system can no longer meet the requirements for higher volumetric energy density. Materials with high gram capacity, such as silicon and phosphorus, have high reversible capacity. Therefore, application of materials such as silicon and phosphorus as negative electrode materials for electrochemical apparatuses can further increase the volumetric energy density of the electrochemical apparatus. However, negative electrode materials with high gram capacity undergo significant swelling during cycling, affecting the service life of the electrochemical apparatus. Therefore, there is an urgent need for a technical solution to increase the volumetric energy density of the electrochemical apparatus while ensuring that the electrochemical apparatus has a long service life.

An embodiment of this application provides an electrochemical apparatus. A negative electrode active material of the electrochemical apparatus includes a first active material and a second active material, the first active material has a gram capacity less than the second active material, and the electrochemical apparatus includes N cycle sections arranged in chronological order, where N is an integer greater than or equal to 2, and the i-th cycle section includes at least one charge-discharge cycle of the electrochemical apparatus. A discharge capacity in a single discharge process in the i-th cycle section is denoted as Qᵢ, and a discharge capacity in a single discharge process in the (i+1)-th cycle section is denoted as Qᵢ₊₁, where Qᵢ > Qᵢ₊₁.

Gram capacity refers to a ratio of an electric capacity released by an active material inside a battery to a mass of the active material, and the unit of gram capacity is milliampere-hours per gram (mA h/g). The first active material has a gram capacity less than the second active material. When the first active material and the second active material of a same mass are used as negative electrode active materials of the battery, an amount of electrical energy released by the first active material is less than an amount of electrical energy released by the second active material.

The first active material includes at least one of a combination of graphite, soft carbon, hard carbon, carbon fiber, and meso-carbon microbeads; and/or the second active material includes at least one of a combination of silicon, silicon oxide compounds, silicon-carbon composites, and silicon alloys.

The discharge capacity in a single discharge process in the i-th cycle section is denoted as Qᵢ, and the discharge capacity in a single discharge process in the (i+1)-th cycle section is denoted as Qᵢ₊₁. In other words, in each charge-discharge cycle included in the i-th cycle section, the discharge capacity of the electrochemical apparatus is Qᵢ, and in each charge-discharge cycle included in the (i+1)-th cycle section, the discharge capacity of the electrochemical apparatus is Qᵢ₊₁. In each cycle section, the fixed capacity discharge is performed in each charge-discharge cycle of the electrochemical apparatus.

In this embodiment of the application, since the gram capacity of the second active material is greater than that of the first active material, the swelling rate of the second active material during the cycling of the electrochemical apparatus is greater than that of the first active material; and the life cycle of the electrochemical apparatus is divided into multiple cycle sections. The fixed capacity discharge is performed in each cycle section, and the discharge capacity is stepwise decreased in chronological order for each cycle section. In the early stage of the life cycle of the electrochemical apparatus, the first active material is mainly used for the discharge, and as the cycle decay progresses, the second active material is gradually activated, allowing the second active material to be used for shallow discharge and reducing the volume swelling of the electrochemical apparatus caused by the swelling of the second active material. Thus, this improves the cycling performance of the electrochemical apparatus and extends the service life, making the electrochemical apparatus have a long service life on the premise of increasing the volumetric energy density of the electrochemical apparatus.

In a possible implementation, the discharge capacity Qᵢ of the electrochemical apparatus in a single discharge process in the first cycle section is less than an initial capacity of the electrochemical apparatus. For example, if the initial capacity of the electrochemical apparatus is C, then Q₁ may be equal to 0.98C.

The initial capacity of the electrochemical apparatus can be calibrated as follows: For an electrochemical apparatus having not undergone charge-discharge cycles, the electrochemical apparatus is first fully charged with a constant current and a constant voltage, then the electrochemical apparatus is discharged with a constant current until the lower limit voltage (discharge cut-off voltage), and this discharge capacity is taken as the initial capacity C of the electrochemical apparatus.

For example, a brand-new electrochemical apparatus purchased on the market is charged at a constant current of 0.2C in a 25°C environment until the voltage of the electrochemical apparatus is 4.45 V, then the electrochemical apparatus is charged at a constant voltage of 4.45 V until the charging current is less than 0.025C. The electrochemical apparatus in this case is considered to be fully charged. The fully charged electrochemical apparatus is discharged at a constant current of 0.2C until the voltage of the electrochemical apparatus is 3.0 V, and an actual capacity of the electrochemical apparatus at this moment is recorded. The above process is repeated three times, and the arithmetic mean of the actual capacities of the electrochemical apparatus recorded three times is calculated as the initial capacity C of the electrochemical apparatus.

In this embodiment of the application, since the first cycle section includes the first several charge-discharge cycles of the electrochemical apparatus, the discharge capacity of the electrochemical apparatus in a single discharge process in the first cycle section is less than the initial capacity, so that not all of the second active material is activated when the electrochemical apparatus performs charge-discharge cycles in the first cycle section, reducing the amount of the second active material activated in the early cycles in the electrochemical apparatus. This can reduce the volume swelling of the electrochemical apparatus and retain more of the second active material for later cycles in the electrochemical apparatus, so as to take advantage of the high gram capacity of the second active material in the later stage of cycles in the electrochemical apparatus and extend the service life of the electrochemical apparatus.

In a possible implementation, when the I-th cycle section includes at least two charge-discharge cycles of the electrochemical apparatus; and for the i-th charge-discharge cycle and the (j+1)-th charge-discharge cycle included in a same cycle section, with j being an integer greater than or equal to 1, a discharge cut-off voltage of the electrochemical apparatus in the j-th charge-discharge cycle is denoted as Vⱼ, and a discharge cut-off voltage of the electrochemical apparatus in the (j+1)-th charge-discharge cycle is denoted as Vⱼ₊₁, where Vⱼ and Vⱼ₊₁ satisfy Vⱼ > Vⱼ₊₁.

In this embodiment of the application, the electrochemical apparatus performs the fixed capacity discharge in the same cycle section, that is, the discharge capacity is the same for each charge-discharge cycle in the same cycle section. In the same cycle section, as the number of cycles increases, the cycling performance of the electrochemical device decays, requiring a reduction in the discharge cut-off voltage to ensure that the discharge capacity of the electrochemical apparatus remains constant. Since the second active material participates in the discharge process of the electrochemical apparatus later than the first active material, reducing the discharge cut-off voltage of the electrochemical apparatus can enable more of the second active material to be activated, thereby gradually activating the second active material. This enables the second active material to be used for shallow discharge and reduces the swelling of the second active material, thereby extending the service life of the electrochemical apparatus and improving its cycling performance.

It should be noted that due to testing methods, testing errors, changes in environmental conditions, and other reasons, the measured Vⱼ and Vⱼ₊₁ may not all satisfy Vⱼ > Vⱼ₊₁, but in the same cycle section, as the number of charge-discharge cycles increases, the discharge cut-off voltage of the electrochemical apparatus exhibits a trend of gradual decrease, that is, in the same cycle section, the discharge cut-off voltage of the electrochemical apparatus is negatively correlated with the number of charge-discharge cycles.

In a possible implementation, when the mass percentage of the second active material in the negative electrode active material is in the range of (0%, 10%], a value range for the number of charge-discharge cycles included in the I-th cycle section is [100, 200]; and when the mass percentage of the second active material in the negative electrode active material is in the range of (10%, 60%], a value range for the number of charge-discharge cycles included in the I-th cycle section is [10, 100). For example, when the mass percentage of the second active material in the negative electrode active material is 10%, the number of charge-discharge cycles included in each cycle section is 100, and when the mass percentage of the second active material in the negative electrode active material is 15%, the number of charge-discharge cycles included in each cycle section is 50.

The negative electrode active material of the electrochemical apparatus includes the first active material and the second active material, the first active material has a gram capacity less than the second active material, and the cycle decay of the electrochemical apparatus accelerates with the increase in the percentage of the second active material. When the mass percentage of the second active material in the negative electrode active material is larger, each cycle section includes a smaller number of charge-discharge cycles, thus the life cycle of the electrochemical apparatus includes a larger number of cycle sections, reducing the amount of the second active material activated in the early cycles to reduce the volume swelling of the electrochemical apparatus and extend the service life of the electrochemical apparatus. When the mass percentage of the second active material in the negative electrode active material is smaller, each cycle section includes a larger number of charge-discharge cycles, thus the life cycle of the electrochemical apparatus includes a smaller number of cycle sections, fully taking advantage of the high gram capacity of the second active material and increasing the volumetric capacity density of the electrochemical apparatus.

In this embodiment of the application, when the mass percentage of the second active material in the negative electrode active material is less than or equal to 10%, the number of charge-discharge cycles included in each cycle section is greater than or equal to 100 and less than or equal to 200; and when the mass percentage of the second active material in the negative electrode active material is greater than 10% and less than or equal to 60%, the number of charge-discharge cycles included in each cycle section is greater than or equal to 10 and less than 100, so that the number of charge-discharge cycles included in each cycle section corresponds to the mass percentage of the second active material in the negative electrode active material. This reduces the swelling of the second active material while fully taking advantage of the high gram capacity of the second active material, and ensures that the electrochemical apparatus has a long service life while increasing the volumetric capacity density of the electrochemical apparatus.

It should be noted that the mass percentage of the second active material in the negative electrode active material is not limited to (0%, 60%], and that the mass percentage of the second active material in the negative electrode active material may be larger. For example, the mass percentage of the second active material in the negative electrode active material is in the range of [80%, 100%]. When the mass percentage of the second active material in the negative electrode active material is in the range of [80%, 100%], the range for the number of charge-discharge cycles included in each cycle section is [10, 50].

It should also be noted that the number of charge-discharge cycles included in different cycle sections can be equal or unequal. When the number of charge-discharge cycles included in different cycle sections is unequal, the number of charge-discharge cycles included in the preceding cycle sections may be greater than or less than the number of charge-discharge cycles included in the following cycle sections. This is not limited in this embodiment of this application.

In a possible implementation, when the mass percentage of the second active material in the negative electrode active material is in the range of (0%, 10%], Qi and Qᵢ₊₁ satisfy 0.02C ≤ Qᵢ - Qᵢ₊₁ ≤ 0.1C; and when the mass percentage of the second active material in the negative electrode active material is in the range of (10%, 60%], Qᵢ and Qᵢ₊₁ satisfy 0.005C ≤ Qᵢ - Qᵢ₊₁ ≤ 0.02C; where C is the initial capacity of the electrochemical apparatus. For example, when the mass percentage of the second active material in the negative electrode active material is 10%, Qᵢ - Qᵢ₊₁ = 2%, that is, the discharge capacities corresponding to each cycle section are 98%, 96%, 94%, ..., 80%, and when the mass percentage of the second active material in the negative electrode active material is 15%, Qᵢ - Qᵢ₊₁ =1%, that is, the discharge capacities corresponding to each cycle section are 99%, 98%, 97%, ..., 80%.

The negative electrode active material of the electrochemical apparatus includes the first active material and the second active material, the first active material has a gram capacity less than the second active material, and the cycle decay of the electrochemical apparatus accelerates with the increase in the percentage of the second active material. When the mass percentage of the second active material in the negative electrode active material is large, the discharge capacities corresponding to adjacent cycle sections have a small difference, so that the discharge capacity matches the cycle decay of the electrochemical apparatus to reduce the volume swelling of the electrochemical apparatus and extend the service life of the electrochemical apparatus. When the mass percentage of the second active material in the negative electrode active material is small, the discharge capacities corresponding to adjacent cycle sections have a large difference, so that the electrochemical apparatus can release more electricity in the early cycles, fully taking advantage of the energy density of the electrochemical apparatus.

In this embodiment of the application, when the mass percentage of the second active material in the negative electrode active material is less than or equal to 10%, 0.02C ≤ Qi - Qᵢ₊₁ ≤ 0.1C, and when the mass percentage of the second active material in the negative electrode active material is greater than 10% and less than or equal to 60%, 0.005C ≤ Qi - Qᵢ₊₁ ≤ 0.02C, so that the rate of decrease in discharge capacity matches the rate of decay of the electrochemical apparatus. This reduces the swelling of the second active material while fully taking advantage of the high gram capacity of the second active material, and ensures that the electrochemical apparatus has a long service life while increasing the volumetric capacity density of the electrochemical apparatus.

It should be noted that the mass percentage of the second active material in the negative electrode active material is not limited to (0%, 60%], and that the mass percentage of the second active material in the negative electrode active material may be larger. For example, the mass percentage of the second active material in the negative electrode active material is in the range of [80%, 100%]. When the mass percentage of the second active material in the negative electrode active material is in the range of [80%, 100%], Qi and Qᵢ₊₁ satisfy 0.001C ≤ Qᵢ - Qᵢ₊₁ ≤ 0.1C.

It should also be noted that the difference in discharge capacity between two cycle sections included in different adjacent cycle section pairs can be equal or unequal. An adjacent cycle section pair refers to two adjacent cycle sections, and cycle sections included in different adjacent cycle section pairs are not completely the same. When the difference in discharge capacity between two cycle sections included in different adjacent cycle section pairs is unequal, the difference in discharge capacity between two cycle sections included in a preceding adjacent cycle section pair may be greater than or less than the difference in discharge capacity between two cycle sections included in a following adjacent cycle section pair, that is, Qᵢ - Qᵢ₊₁ can be greater than or less than Qᵢ₊₁ - Qᵢ₊₂. This is not limited in this embodiment of this application.

In a possible implementation, cut-off conditions for the i-th cycle section may be a discharge cut-off voltage and the number of charge-discharge cycles. The electrochemical apparatus performs charge-discharge cycles with Qᵢ in the i-th cycle section until the discharge cut-off voltage of the electrochemical apparatus is less than a preset voltage threshold, or the number of charge-discharge cycles performed by the electrochemical apparatus in the i-th cycle section reaches a preset number, then the electrochemical apparatus starts performing charge-discharge cycles with Qᵢ₊₁, and the electrochemical apparatus enters the (i+1)-th cycle section for charge-discharge cycling.

After the electrochemical apparatus enters the i-th cycle section for charge-discharge cycling, the electrochemical apparatus performs the fixed capacity cycling with a discharge capacity of Qᵢ. After each charge-discharge cycle, an electrochemical apparatus management system included in the electrochemical apparatus determines whether the discharge cut-off voltage of the electrochemical apparatus is less than or equal to the preset voltage threshold, for example, a voltage threshold of 3.0 V. If the discharge cut-off voltage of the electrochemical apparatus is less than or equal to the voltage threshold, the electrochemical apparatus is controlled to perform the fixed capacity cycling with a discharge capacity of Qᵢ₊₁, that is, the electrochemical apparatus enters the (i+1)-th cycle section for charge-discharge cycling. If the discharge cut-off voltage of the electrochemical apparatus is greater than the voltage threshold, then the electrochemical apparatus management system determines whether the number of charge-discharge cycles performed by the electrochemical apparatus in the i-th cycle section reaches the preset number, for example, a preset number of 100. If the number of charge-discharge cycles performed by the electrochemical apparatus in the i-th cycle section reaches the preset number, the electrochemical apparatus is controlled to perform the fixed capacity cycling with a discharge capacity of Qᵢ₊₁, that is, the electrochemical apparatus enters the (i+1)-th cycle section for charge-discharge cycling; or if the number of charge-discharge cycles performed by the electrochemical apparatus in the i-th cycle section does not reach the preset number, the electrochemical apparatus is controlled to continue performing the fixed capacity cycling with a discharge capacity of Qᵢ.

In this embodiment of the application, the discharge cut-off voltage and the number of charge-discharge cycles are used as the cut-off conditions for each cycle section. When the discharge cut-off voltage of the electrochemical apparatus is less than the preset voltage threshold or the number of charge-discharge cycles reaches the preset number, the electrochemical apparatus enters a next cycle section for charge-discharge cycling until the discharge capacity of the electrochemical apparatus is lower than a lower limit of health. For example, the lower limit of health may be 0.8C, where C is the initial capacity of the electrochemical apparatus. Then the discharge capacity of the electrochemical apparatus no longer changes. This reduces the volume swelling of the electrochemical apparatus and extends the service life of the electrochemical apparatus while fully taking advantage of the energy density of the electrochemical apparatus.

In a possible implementation, the first active material includes graphite, and the second active material includes silicon.

In this embodiment of the application, since silicon has a higher gram capacity compared to graphite, the use of silicon-containing materials as the second active material can improve the volumetric energy density of the electrochemical apparatus. However, silicon undergoes significant volume swelling during cycling. For an electrochemical apparatus with graphite and silicon as negative electrode active materials, its life cycle is divided into multiple cycle sections, with each cycle section including multiple charge-discharge cycles. The fixed capacity discharge is performed in each cycle section, and the discharge capacity of the electrochemical apparatus in each cycle section decreases stepwise in chronological order. In the early stage, graphite is mainly used for discharge, and as the cycle decay progresses, silicon is gradually activated for discharge, allowing silicon to be used for shallow discharge, thereby reducing the volume swelling of silicon and reducing the volume swelling of the electrochemical apparatus. This improves the cycling of the electrochemical apparatus and extends the service life of the electrochemical apparatus.

In addition to graphite, the first active material may alternatively be mesocarbon microbeads (Mesocarbon microbeads, MCMB), Li₄Ti₅O₁₂, or the like. The second active material includes silicon. For example, the second active material may be SiOₓ (0 < x < 2), micron silicon, silicon nanowires, SiC, or the like. The various second active materials can be freely combined, and the negative electrode active material of the electrochemical apparatus can include one or more of the second active materials. The second active material may alternatively be a transition metal oxide (such as MnO, SnO₂, or CoO), phosphorus, or the like. The first active material and the second active material can be freely combined, and the negative electrode active material of the electrochemical apparatus can include multiple first active materials and/or multiple second active materials.

In a possible implementation, the mass percentage of silicon in the negative electrode active material of the electrochemical apparatus is in the range of (0%, 60%]. For example, the mass percentage of silicon in the negative electrode active material may be 1%, 10%, 20%, 30%, 60%, or the like.

In this embodiment of the application, when silicon is used as the second active material, as the percentage of silicon in the negative electrode active material increases, the volumetric energy density of the electrochemical apparatus increases, but the cycle life of the electrochemical apparatus decays. The use of silicon with a mass percentage of less than or equal to 60% in the negative electrode active material can increase the volumetric energy density of the electrochemical apparatus without excessively reducing the cycle life of the electrochemical apparatus. Further, controlling the electrochemical apparatus to operate at different discharge cut-off voltages and/or charge cut-off voltages in different time periods can ensure that the electrochemical apparatus has a long cycle life on the premise of increasing the volumetric energy density of the electrochemical apparatus.

In a possible implementation, the mass percentage of silicon in the negative electrode active material of the electrochemical apparatus is in the range of [10%, 20%]. For example, the mass percentage of silicon in the negative electrode active material may be 1%, 10%, 20%, or the like.

In this embodiment of the application, when silicon is used as the second active material, and the mass percentage of silicon in the negative electrode active material is in the range of [10%, 20%], based on the high gram capacity characteristic of silicon, the volumetric energy density of the electrochemical apparatus can be increased. Since the mass percentage of silicon is less than or equal to 20%, the cycling performance of the electrochemical apparatus is not significantly affected. Controlling the electrochemical apparatus to operate at different discharge cut-off voltages and/or charge cut-off voltages in different time periods can ensure that the electrochemical apparatus has a long cycle life while the energy density of the electrochemical apparatus can be fully utilized.

### Control method for electrochemical apparatus

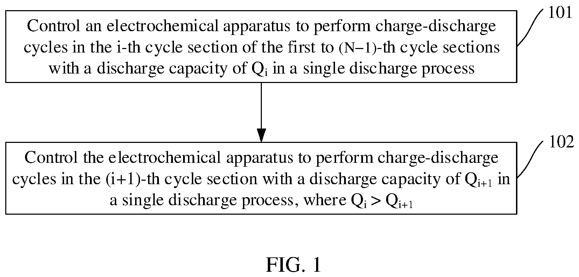

FIG. 1 is a flowchart of a control method for electrochemical apparatus according to one embodiment of this application for controlling the charge-discharge process of the electrochemical apparatus. A negative electrode active material of the electrochemical apparatus includes a first active material and a second active material, the first active material has a gram capacity less than the second active material, and the electrochemical apparatus includes N cycle sections arranged in chronological order, where N is an integer greater than or equal to 2, and each cycle section includes at least one charge-discharge cycle of the electrochemical apparatus. As shown in FIG. 1, the control method for electrochemical apparatus includes the following steps.

Step 101. Control the electrochemical apparatus to perform charge-discharge cycles in the i-th cycle section with a discharge capacity of Qᵢ in a single discharge process.

Each cycle section has a corresponding discharge capacity. The i-th cycle section of the N cycle sections corresponds to a discharge capacity of Qᵢ. When the electrochemical apparatus performs charge-discharge cycles in the i-th cycle section, the electrochemical apparatus is controlled to perform charge-discharge cycles with a discharge capacity of Qᵢ. In other words, in each charge-discharge cycle included in the i-th cycle section, the electrochemical apparatus is controlled to perform the fixed capacity discharge with a discharge capacity of Qᵢ for each charge-discharge cycle.

It should be noted that the i-th cycle section refers to the i-th cycle section in chronological order, that the (i+1)-th cycle section refers to the (i+1)-th cycle section in chronological order, and that the (i+1)-th cycle section is located after the i-th cycle section. For example, the first cycle section is a first cycle section for the electrochemical apparatus, the first cycle section including first 100 charge-discharge cycles of the electrochemical apparatus, and the second cycle section is a second cycle section for the electrochemical apparatus, the second cycle section including the 101-st charge-discharge cycle to the 200-th charge-discharge cycle of the electrochemical apparatus.

Step 102. Control the electrochemical apparatus to perform charge-discharge cycles in the (i+1)-th cycle section with a discharge capacity of Qᵢ₊₁ in a single discharge process, where Qᵢ > Qᵢ₊₁.

The electrochemical apparatus is controlled to perform charge-discharge cycles in the i-th cycle section with a discharge capacity of Qᵢ and to perform charge-discharge cycles in the (i+1)-th cycle section with a discharge capacity of Qᵢ₊₁. In other words, the electrochemical apparatus performs the fixed capacity discharge in each charge-discharge cycle included in the i-th cycle section with a discharge capacity of Qᵢ, and performs the fixed capacity discharge in each charge-discharge cycle included in the (i+1)-th cycle section with a discharge capacity of Qᵢ₊₁. Since Qᵢ > Qᵢ₊ᵢ, that is, a discharge capacity corresponding to a previous cycle section is greater than that of a following cycle section, and the discharge capacity of the electrochemical apparatus decreases stepwise in chronological order.

In this embodiment of the application, since the gram capacity of the second active material is greater than that of the first active material, the swelling rate of the second active material during the cycling of the electrochemical apparatus is greater than that of the first active material. The electrochemical apparatus is controlled to perform the fixed capacity discharge in each cycle section, and the discharge capacity of the electrochemical apparatus is controlled to decrease stepwise in chronological order. In the early stage of the life cycle of the electrochemical apparatus, the first active material is mainly used for the discharge, and as the cycle decay progresses, the second active material is gradually activated, allowing the second active material to be used for shallow discharge and reducing the volume swelling of the electrochemical apparatus caused by the swelling of the second active material. Thus, this improves the cycling performance of the electrochemical apparatus and extends the service life, making the electrochemical apparatus have a long service life on the premise of increasing the volumetric energy density of the electrochemical apparatus.

In a possible implementation, when the electrochemical apparatus is controlled to perform the fixed capacity discharge in a cycle section, for the j-th charge-discharge cycle and the (j+1)-th charge-discharge cycle included in this cycle section, with j being an integer greater than or equal to 1, a discharge cut-off voltage of the electrochemical apparatus in the j-th charge-discharge cycle can be controlled to be Vⱼ and a discharge cut-off voltage of the electrochemical apparatus in the (j+1)-th charge-discharge cycle can be controlled to be Vⱼ₊₁, where Vⱼ > Vⱼ₊₁.

For the j-th charge-discharge cycle and the (j+1)-th charge-discharge cycle in the same cycle section, the j-th charge-discharge cycle refers to a j-th charge-discharge cycle of the electrochemical apparatus in the cycle section in chronological order, and the (j+1)-th charge-discharge cycle refers to a (j+1)-th charge-discharge cycle of the electrochemical apparatus in the cycle section in chronological order. The (j+1)-th charge-discharge cycle is located after the j-th charge-discharge cycle. For example, in a cycle section, the cycle section includes the 101-st charge-discharge cycle to the 200-th charge-discharge cycle of the electrochemical apparatus. The first charge-discharge cycle corresponding to the cycle section is the 101-st charge-discharge cycle of the electrochemical apparatus. The second charge-discharge cycle corresponding to the cycle section is the 102-nd charge-discharge cycle of the electrochemical apparatus. The 100-th charge-discharge cycle corresponding to the cycle section is the 200-th charge-discharge cycle of the electrochemical apparatus.

In this embodiment of the application, when the electrochemical apparatus is controlled to perform the fixed capacity discharge in a cycle section, a discharge cut-off voltage in a subsequent charge-discharge cycle is controlled to be smaller than a discharge cut-off voltage in a previous charge-discharge cycle to ensure that the discharge capacity of the electrochemical apparatus remains constant. Since the second active material participates in the discharge process of the electrochemical apparatus later than the first active material, reducing the discharge cut-off voltage of the electrochemical apparatus can enable more of the second active material to be activated, thereby gradually activating the second active material. This enables the second active material to be used for shallow discharge and reduces the swelling of the second active material, thereby extending the service life of the electrochemical apparatus and improving its cycling performance.

In a possible implementation, when the electrochemical apparatus is controlled to perform the fixed capacity discharge in each cycle section, the discharge cut-off voltage and the number of charge-discharge cycles can be used as cut-off conditions for the cycle section, that is, whether a cycle section ends is determined based on the discharge cut-off voltage and the number of charge-discharge cycles. A cycle section switching process is described below in detail.

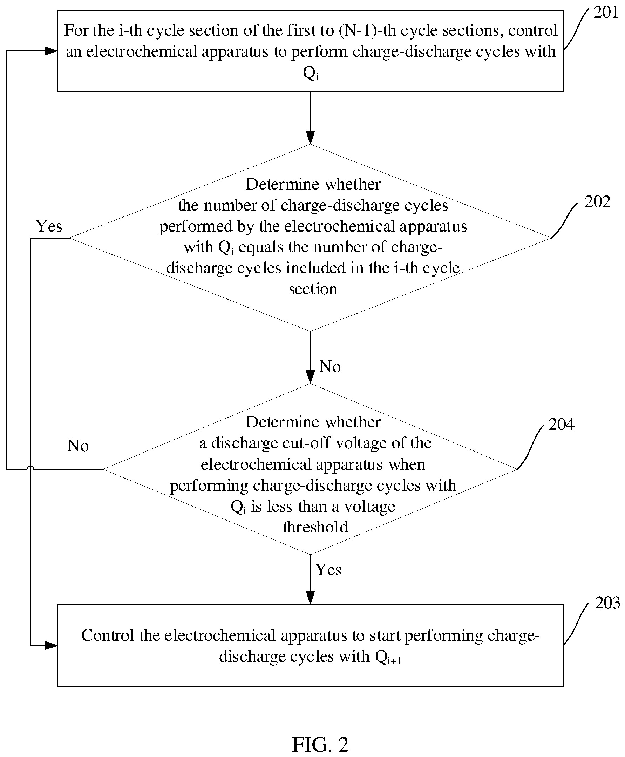

FIG. 2 is a flowchart of a cycle section switching method according to one embodiment of this application. As shown in FIG. 2, the cycle section switching method includes the following steps.

Step 201. Control an electrochemical apparatus to perform charge-discharge cycles with Qᵢ.

Different cycle sections correspond to different discharge capacities. The electrochemical apparatus performs the fixed capacity discharge with a corresponding discharge capacity in each cycle section. The discharge capacity corresponding to the i-th cycle section is denoted as Qᵢ. The electrochemical apparatus is controlled to perform the fixed capacity discharge in each charge-discharge cycle included in the i-th cycle section with a discharge capacity of Qᵢ.

Step 202. Determine whether the number of charge-discharge cycles performed by the electrochemical apparatus with Qi equals the number of charge-discharge cycles included in the i-th cycle section; if yes, executing step 203, otherwise executing step 204.

During the process of controlling the electrochemical apparatus to perform the fixed capacity discharge cycling in the i-th cycle section, after each charge-discharge cycle, it is determined whether the number of charge-discharge cycles completed in the i-th cycle section equals a preset number. If the number of charge-discharge cycles completed in the i-th cycle section equals the preset number, step 203 is executed; or if the number of charge-discharge cycles completed in the i-th cycle section is less than the preset number, step 204 is executed.

Each cycle section has a corresponding preset number of charge-discharge cycles, and the preset number of charge-discharge cycles for different cycle sections may be the same or different.

Step 203. Control the electrochemical apparatus to start performing charge-discharge cycles with Qᵢ₊₁.

The discharge capacity corresponding to the (i+1)-th cycle section is denoted as Qᵢ₊₁. After it is determined that the number of charge-discharge cycles performed by the electrochemical apparatus in the i-th cycle section reaches a preset number, then the electrochemical apparatus starts performing charge-discharge cycles with Qᵢ₊₁, and the electrochemical apparatus performs the fixed capacity discharge in the (i+1)-th cycle section.

When the electrochemical apparatus is controlled to perform the fixed capacity discharge in the (i+1)-th cycle section, the processing procedure for controlling the electrochemical apparatus to perform the fixed capacity discharge in the i-th cycle section as described above is followed. If the (i+1)-th cycle section is the last cycle section for the electrochemical apparatus, after the (i+1)-th cycle section ends, the charge-discharge operation on the electrochemical apparatus stops. If the (i+1)-th cycle section is not the last cycle section for the electrochemical apparatus, after the (i+1)-th cycle section ends, the electrochemical apparatus is controlled to start performing the fixed capacity discharge in the (i+2)-th cycle section.

Step 204. Determine whether the discharge cut-off voltage of the electrochemical apparatus when performing charge-discharge cycles with Qᵢ is less than a voltage threshold; if yes, executing step 203, otherwise executing step 201.

When it is determined that the number of charge-discharge cycles performed by the electrochemical apparatus in the i-th cycle section is less than the preset number, it is further determined whether the discharge cut-off voltage of the electrochemical apparatus in the most recent charge-discharge cycle is less than a voltage threshold. If the discharge cut-off voltage of the electrochemical apparatus in the most recent charge-discharge cycle is less than the voltage threshold, it indicates that the electrochemical apparatus can no longer perform the fixed capacity discharge, that is, the electrochemical apparatus can no longer discharge the set amount of electricity in a single discharge process. Correspondingly, step 203 is executed, the discharge capacity in a single discharge process is reduced, and the electrochemical apparatus is controlled to perform charge-discharge cycles in the (i+1)-th cycle section. If the discharge cut-off voltage of the electrochemical apparatus in the most recent charge-discharge cycle is greater than or equal to the voltage threshold, it indicates that the electrochemical apparatus can still perform the fixed capacity discharge. In this case, step 201 is executed to continue controlling the electrochemical apparatus to perform the fixed capacity discharge in the i-th cycle section.

Different cycle sections may correspond to a same preset number (preset number of charge-discharge cycles). For example, the number of charge-discharge cycles in each cycle section may be preset to 100. Of course, different cycle sections may alternatively correspond to different preset numbers (preset number of charge-discharge cycles). This is not limited in this embodiment of this application.

In this embodiment of the application, the discharge cut-off voltage and the number of charge-discharge cycles are used as the cut-off conditions for each cycle section. When the discharge cut-off voltage of the electrochemical apparatus is less than the preset voltage threshold or the number of charge-discharge cycles reaches the preset number, the electrochemical apparatus enters a next cycle section for charge-discharge cycling until the discharge capacity of the electrochemical apparatus is lower than a lower limit of health. For example, the lower limit of health may be 0.8C, where C is the initial capacity of the electrochemical apparatus. Then the discharge capacity of the electrochemical apparatus no longer changes. This reduces the volume swelling of the electrochemical apparatus and extends the service life of the electrochemical apparatus while fully taking advantage of the energy density of the electrochemical apparatus.

In a possible implementation, the first active material includes graphite, and the second active material includes silicon.

In this embodiment of the application, since silicon has a higher gram capacity compared to graphite, the use of silicon-containing materials as the second active material can improve the volumetric energy density of the electrochemical apparatus. However, silicon undergoes significant volume swelling during cycling. For an electrochemical apparatus with graphite and silicon as negative electrode active materials, its life cycle is divided into multiple cycle sections, with each cycle section including multiple charge-discharge cycles. The fixed capacity discharge is performed in each cycle section, and the discharge capacity of the electrochemical apparatus in each cycle section decreases stepwise in chronological order. In the early stage, graphite is mainly used for discharge, and as the cycle decay progresses, silicon is gradually activated for discharge, allowing silicon to be used for shallow discharge, thereby reducing the volume swelling of silicon and reducing the volume swelling of the electrochemical apparatus. This improves the cycling of the electrochemical apparatus and extends the service life of the electrochemical apparatus.

In a possible implementation, the mass percentage of silicon in the negative electrode active material of the electrochemical apparatus is in the range of [10%, 20%]. For example, the mass percentage of silicon in the negative electrode active material may be 1%, 10%, 20%, or the like.

In this embodiment of the application, when silicon is used as the second active material, and the mass percentage of silicon in the negative electrode active material is in the range of [10%, 20%], based on the high gram capacity characteristic of silicon, the volumetric energy density of the electrochemical apparatus can be increased. Since the mass percentage of silicon is less than or equal to 20%, the cycling performance of the electrochemical apparatus is not significantly affected. Controlling the electrochemical apparatus to operate at different discharge cut-off voltages and/or charge cut-off voltages in different time periods can ensure that the electrochemical apparatus has a long cycle life while the energy density of the electrochemical apparatus can be fully utilized.

It should be noted that since the details of the control method for electrochemical apparatus have been described in detail in the foregoing electrochemical apparatus embodiment, and the specific process can be found in the description of the foregoing electrochemical device embodiment, details are not repeated herein.

### Electrochemical apparatus management system

One embodiment of this application provides an electrochemical apparatus management system. The electrochemical apparatus management system is connected to an electrochemical apparatus, and the electrochemical apparatus management system is configured to execute the control method for electrochemical apparatus according to the foregoing embodiment.

It should be noted that since the electrochemical apparatus and the control method for electrochemical apparatus have been described in detail in the foregoing embodiment, the process of the electrochemical apparatus management system controlling the operation of the electrochemical apparatus can refer to the descriptions in the foregoing embodiment, and details are not repeated herein.

### Electronic device

One embodiment of this application provides an electronic device including the electrochemical apparatus or the electrochemical apparatus management system in the foregoing embodiment. The electronic device may be a mobile phone, a drone, or the like. A negative electrode active material of the electrochemical apparatus in the electronic device includes a first active material and a second active material. Since the gram capacity of the second active material is greater than that of the first active material, the swelling rate of the second active material during the cycling of the electrochemical apparatus is greater than that of the first active material. The electrochemical apparatus is controlled to perform the fixed capacity discharge in each cycle section, and the discharge capacity of the electrochemical apparatus is controlled to decrease stepwise in chronological order. In the early stage of the life cycle of the electrochemical apparatus, the first active material is mainly used for the discharge, and as the cycle decay progresses, the second active material is gradually activated, allowing the second active material to be used for shallow discharge and reducing the volume swelling of the electrochemical apparatus caused by the swelling of the second active material. Thus, this improves the cycling performance of the electrochemical apparatus and extends the service life, making the electrochemical apparatus have a long service life on the premise of increasing the volumetric energy density of the electrochemical apparatus.

### Computer-readable storage medium

This application further provides a computer-readable storage medium. The computer-readable storage medium has stored thereon a computer program, and when the computer program is run by a processor, the control method for electrochemical apparatus according to any of the foregoing embodiments is implemented. Specifically, a system or apparatus equipped with a storage medium may be provided, where software program code implementing the functions of any of the foregoing embodiments is stored on the storage medium, and a computer (or CPU or MPU) of the system or apparatus is caused to read and execute the program code stored in the storage medium.

In this case, the program code read from the storage medium itself can implement the functions of any of the foregoing embodiments. Therefore, the program code and the storage medium storing the program code constitute a part of this application.

Examples of storage media for providing program code include floppy disks, hard disks, magneto-optical disks, optical disks (such as CD-ROM, CD-R, CD-RW, DVD-ROM, DVD-RAM, DVD-RW, and DVD+RW), magnetic tapes, non-volatile memory cards, and ROM. Alternatively, the program code can be downloaded from a server computer via a communication network.

Furthermore, it should be clear that the functions of any of the foregoing embodiments can be implemented not only by executing the program code read out by the computer, but also by causing an operating system or the like operating on the computer to perform some or all of actual operations by means of instructions based on the program code.

In addition, it can be understood that the program code read from the storage medium may be written into a memory provided on an expansion board inserted into the computer or written into a memory provided in an expansion module connected to the computer, and thereafter the instructions based on the program code make the CPU or the like installed on the expansion board or expansion module execute some or all of the actual operations, so as to implement the functions of any of the foregoing embodiments.

### Computer program product

An embodiment of this application further provides a computer program product. The computer program product is stored on a computer-readable medium and includes computer-executable instructions. When the computer-executable instructions are executed, at least one processor is caused to execute the control method for electrochemical apparatus in any of the foregoing embodiments. It should be understood that each solution in this embodiment has corresponding technical effects described in the foregoing method embodiment, and details are not repeated herein.

### Commercial value of embodiments of this application

In the mixed negative electrode system including the first active material and the second active material, the second active material has a unit volumetric capacity greater than the first active material. The first active material discharges preferentially over the second active material. Multiple cycle sections are set to control the electrochemical apparatus to perform the fixed capacity discharge in different cycle sections and control the discharge capacity of the electrochemical apparatus to decrease stepwise in chronological order. The first active material is mainly used for discharge in the early stage, and as the cycle decay progresses, the second active material is gradually activated for shallow discharge. The use of the second active material for shallow discharge reduces volume swelling, improves the cycling performance of the electrochemical apparatus, and extends the service life of the electrochemical apparatus. Compared with a one-step constant-current discharge process with a voltage cut-off, the discharge method in some embodiments of this application, although slightly lower in capacity utilization in the early stage, optimizes the trend in later cycles by mitigating side reactions and swelling, and from the perspective of the entire life cycle of the electrochemical apparatus, the energy released by the electrochemical apparatus is increased.

### Experimental examples and comparative examples

In the following, the lithium-ion battery is used as an example of the electrochemical apparatus to specifically describe some experimental examples and comparative examples of some embodiments of this application. Through these experimental examples and comparative examples, it is more readily seen that the electrochemical apparatus and control method therefor, the electrochemical apparatus management system, the electronic device, and the storage medium in these embodiments of this application have significant advantages over the prior art. It should be understood that the following experimental examples and comparative examples are only for better illustrating these embodiments of this application, and are not intended to limit these embodiments of this application.

### <Comparative example 1>

Preparation of positive electrode plate: Aluminum foil was used as the positive electrode current collector; a layer of lithium cobalt oxide slurry was uniformly coated on the surface of the aluminum foil, with the composition of the lithium cobalt oxide slurry being 97.8 wt% LiCoO₂ (LCO), 0.8 wt% polyvinylidene fluoride (PVDF), and 1.4 wt% conductive carbon black; and subsequently cold-pressing was performed to prepare a positive electrode plate.

Preparation of negative electrode plate: Copper foil was used as the negative electrode current collector; a layer of mixed slurry of graphite and silicon is uniformly coated on the surface of the copper foil, with the composition of the slurry being 87.93 wt% artificial graphite, 9.77 wt% silicon carbon, 1.3 wt% carboxymethyl cellulose (CMC), and 1.0 wt% styrene-butadiene rubber (SBR); and subsequently cold-pressing was performed to prepare a negative electrode plate.

Preparation of lithium-ion battery: The positive electrode plate and the negative electrode plate were slit and then wound, with a PE separator between the positive electrode plate and the negative electrode plate for separation, thereby preparing a wound bare cell. The bare cell was sealed at the top and side, sprayed with a code, vacuum dried, injected with electrolyte, and placed standing at a high temperature, followed by formation and capacity grading to obtain a finished lithium-ion battery.

Cycling conditions: A single, unchanging cycle condition was used, where discharge cut-off voltage was 3.0 V, and the charge cut-off voltage was 4.5 V.

The following describes the test methods in various embodiments of this application.
(1) Capacity test for lithium-ion battery: The battery was left standing for 30 minutes in an environment of 25±3°C, constant-current charged at a current of 0.5C (1C was the rated capacity of the battery) to a battery voltage of 4.5 V (rated voltage), and switched to constant-voltage charging, and stopped charging when the current dropped to 0.02C; left standing for 30 minutes; and discharged at a current of 0.2C to 3.0 V and left standing for 30 minutes. The discharge capacity was taken as the actual capacity of the battery.
(2) Discharge capacity retention rate test at 0.5C: The battery was left standing for 30 minutes in an environment of 25±3°C, constant-current charged at a current of 0.5C (1C was the rated capacity of the battery) to a battery voltage of 4.5 V (rated voltage), and switched to constant-voltage charging, and stopped charging when the current dropped to 0.02C; left standing for 30 minutes; the discharge capacity was taken as the initial capacity C₀ of the battery; then the battery was left standing for 30 minutes in an environment of 25±3°C, constant-current charged at a current of 0.5C (1C was the rated capacity of the battery) to a battery voltage of 4.5 V (rated voltage), and switched to constant-voltage charging, and stopped charging when the current dropped to 0.02C; left standing for 30 minutes; and then discharged; and the discharge capacity at that moment was recorded. The discharge capacity retention rate was obtained by dividing the discharge capacity Cₓ at that moment by the initial capacity C₀.

### <Experimental example 1>

Experimental example 1 was different from Comparative example 1 in that the life cycle of the lithium-ion battery was divided into 10 cycle sections, with each cycle section including 100 charge-discharge cycles. The discharge capacity of the first cycle section was 0.98C₀, the discharge capacity of the second cycle section was 0.96C₀, the discharge capacity of the third cycle section was 0.94C₀, the discharge capacity of the fourth cycle section was 0.92C₀, the discharge capacity of the fifth cycle section was 0.90C₀, the discharge capacity of the sixth cycle section was 0.88C₀, the discharge capacity of the seventh cycle section was 0.86C₀, the discharge capacity of the eighth cycle section was 0.84C₀, the discharge capacity of the ninth cycle section was 0.82C₀, and the discharge capacity of the tenth cycle section was 0.8C₀, where C₀ is the initial capacity of the lithium-ion battery.

### <Experimental example 2>

Experimental example 2 was different from Comparative example 1 in that the life cycle of the lithium-ion battery was divided into 16 cycle sections, with each cycle section including 100 charge-discharge cycles. The discharge capacity of the first cycle section was 0.97C₀, the discharge capacity of the second cycle section was 0.94C₀, the discharge capacity of the third cycle section was 0.93C₀, the discharge capacity of the fourth cycle section was 0.92C₀, the discharge capacity of the fifth cycle section was 0.91C₀, the discharge capacity of the sixth cycle section was 0.90C₀, the discharge capacity of the seventh cycle section was 0.89C₀, the discharge capacity of the eighth cycle section was 0.88C₀, the discharge capacity of the ninth cycle section was 0.87C₀, the discharge capacity of the tenth cycle section was 0.86C₀, the discharge capacity of the eleventh cycle section was 0.85C₀, the discharge capacity of the twelfth cycle section was 0.84C₀, the discharge capacity of the thirteenth cycle section was 0.83C₀, the discharge capacity of the fourteenth cycle section was 0.82C₀, the discharge capacity of the fifteenth cycle section was 0.81C₀, and the discharge capacity of the sixteenth cycle section was 0.8C₀.

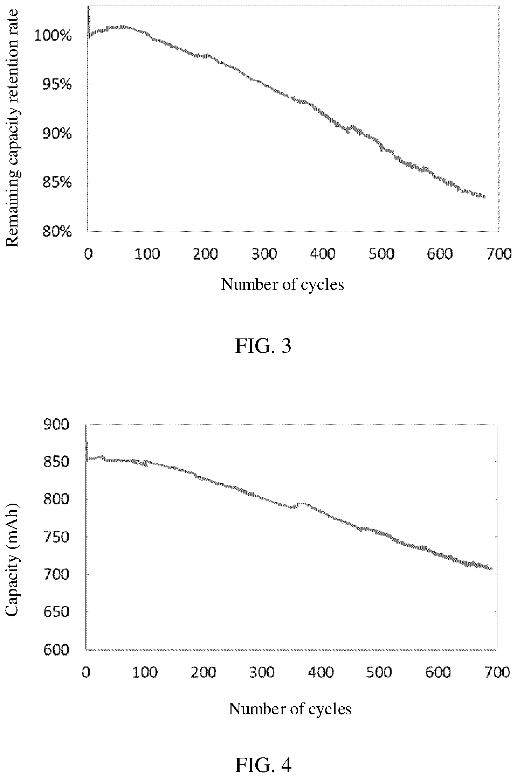

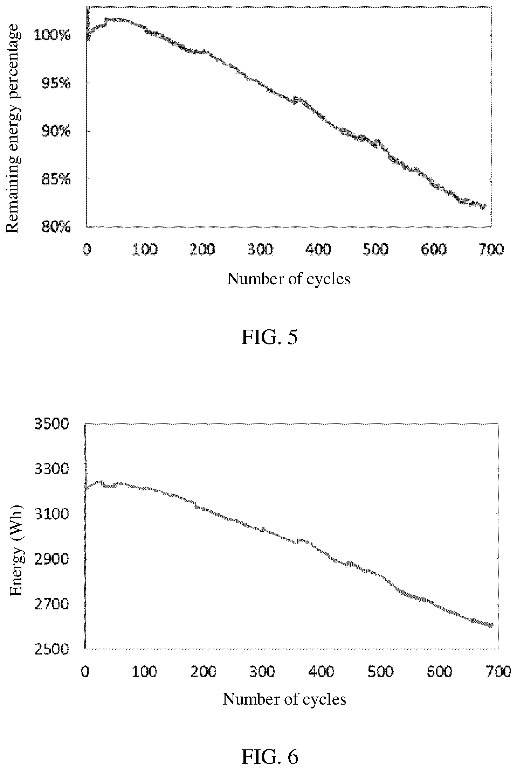

FIG. 3 is a curve of the remaining capacity retention rate of a lithium-ion battery in Comparative example 1 as a function of the number of cycles. FIG. 4 is a curve of the capacity of a lithium-ion battery in Comparative example 1 as a function of the number of cycles. FIG. 5 is a curve of the remaining energy percentage of a lithium-ion battery in Comparative example 1 as a function of the number of cycles. FIG. 6 is a curve of the energy of a lithium-ion battery in Comparative example 1 as a function of the number of cycles.

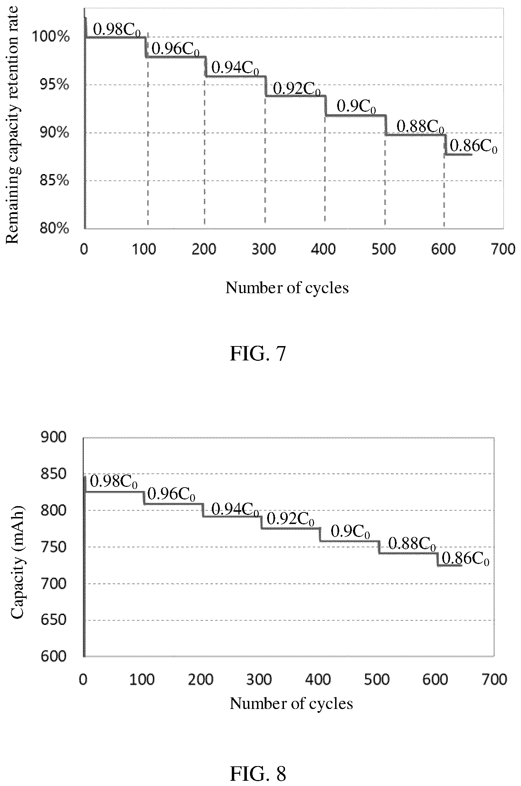

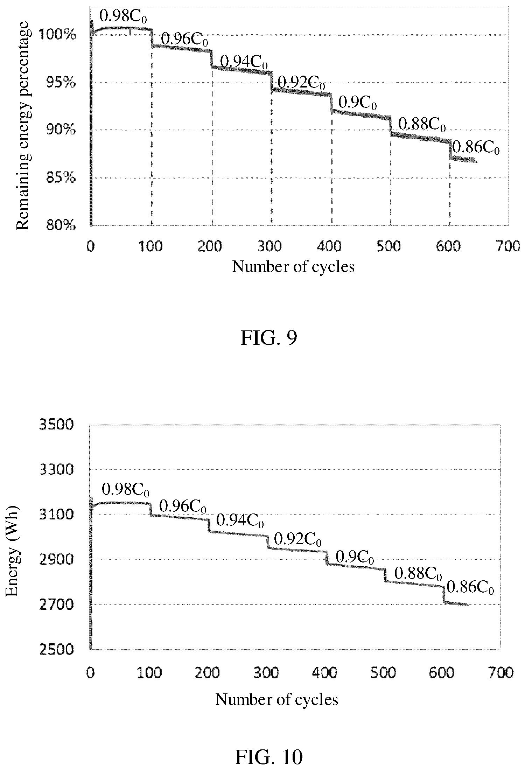

FIG. 7 is a curve of the remaining capacity retention rate of a lithium-ion battery in Experimental example 1 as a function of the number of cycles. FIG. 8 is a curve of the capacity of a lithium-ion battery in Experimental example 1 as a function of the number of cycles. FIG. 9 is a curve of the remaining energy percentage of a lithium-ion battery in Experimental example 1 as a function of the number of cycles. FIG. 10 is a curve of the energy of a lithium-ion battery in Experimental example 1 as a function of the number of cycles.

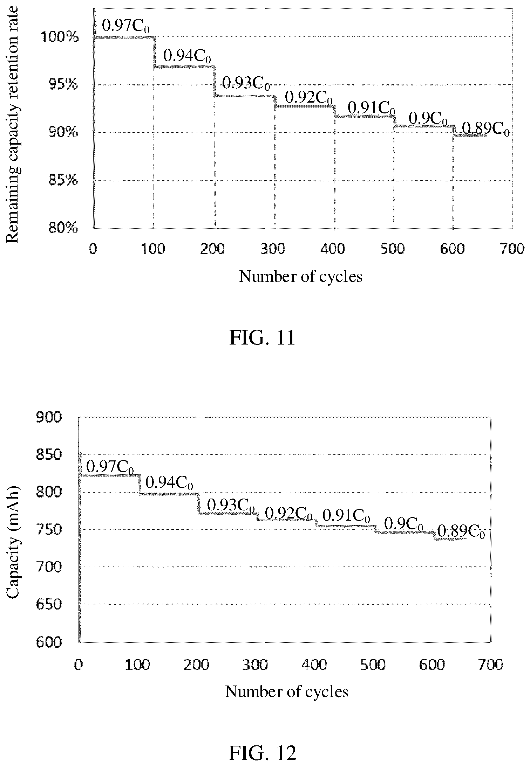

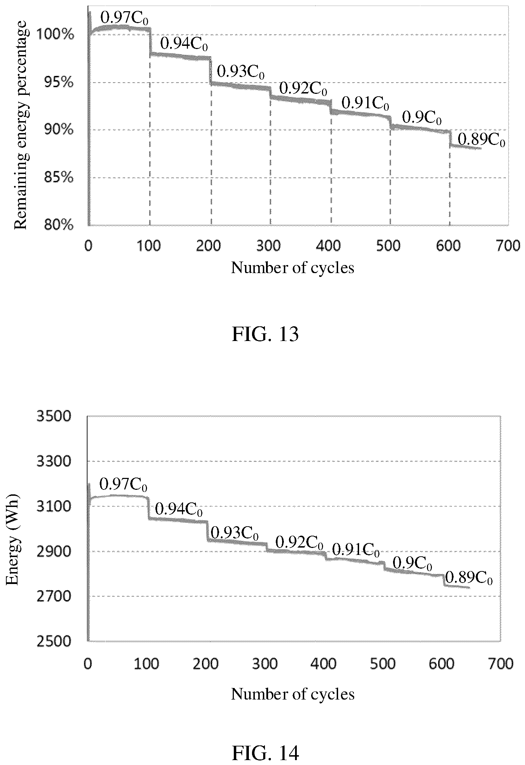

FIG. 11 is a curve of the remaining capacity retention rate of a lithium-ion battery in Experimental example 2 as a function of the number of cycles. FIG. 12 is a curve of the capacity of a lithium-ion battery in Experimental example 2 as a function of the number of cycles. FIG. 13 is a curve of the remaining energy percentage of a lithium-ion battery in Experimental example 2 as a function of the number of cycles. FIG. 14 is a curve of the energy of a lithium-ion battery in Experimental example 2 as a function of the number of cycles.

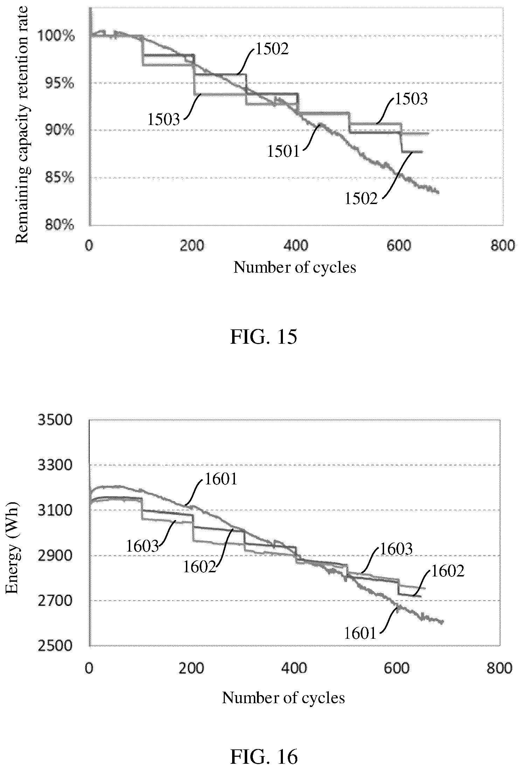

FIG. 15 is curves of the remaining capacity retention rate of lithium-ion batteries in Comparative example 1, Experimental example 1, and Experimental example 2 as a function of the number of cycles, where curve 1501 is the curve of the remaining capacity retention rate of the lithium-ion battery in Comparative example 1 as a function of the number of cycles, curve 1502 is the curve of the remaining capacity retention rate of the lithium-ion battery in Experimental example 1 as a function of the number of cycles, and curve 1503 is the curve of the remaining capacity retention rate of the lithium-ion battery in Experimental example 2 as a function of the number of cycles. FIG. 16 is curves of the energy of lithium-ion batteries in Comparative example 1, Experimental example 1, and Experimental example 2 as a function of the number of cycles, where curve 1601 is the curve of the energy of the lithium-ion battery in Comparative example 1 as a function of the number of cycles, curve 1602 is the curve of the energy of the lithium-ion battery in Experimental example 1 as a function of the number of cycles, and curve 1603 is the curve of the energy of the lithium-ion battery in Experimental example 2 as a function of the number of cycles.

It can be learned from FIG. 15 that in the first 400 charge-discharge cycles, the remaining capacity retention rate of the lithium-ion batteries in Experimental example 1 and Experimental example 2 is lower than that of the lithium-ion battery in Comparative example 1. After 400 charge-discharge cycles, the remaining capacity retention rate of the lithium-ion batteries in Experimental example 1 and Experimental example 2 is higher than that of the lithium-ion battery in Comparative example 1. It can be learned from FIG. 16 that in the first 400 charge-discharge cycles, the energy of the lithium-ion batteries in Experimental example 1 and Experimental example 2 is lower than that of the lithium-ion battery in Comparative example 1. After 400 charge-discharge cycles, the energy of the lithium-ion batteries in Experimental example 1 and Experimental example 2 is higher than that of the lithium-ion battery in Comparative example 1. As compared with Comparative example 1, the lithium-ion batteries in Experimental example 1 and Experimental example 2 have slightly lower capacity utilization in the early stage, but optimize the trend in later cycles by mitigating side reactions and swelling, and from the perspective of the entire life cycle of the lithium-ion battery, the energy released by the lithium-ion batteries in Experimental example 1 and Experimental example 2 is higher.

It should be understood that, various embodiments in this specification are all described in a progressive manner. For same or similar parts in these embodiments, mutual reference may be made. Each embodiment focuses on what is different from other embodiments. Especially, a method embodiment is basically similar to an apparatus embodiment and a system embodiment, and therefore is described briefly; and for related parts, reference may be made to partial descriptions in other embodiments.

It should be understood that specific embodiments of this specification are described above. Other embodiments fall within the scope of the claims. In some cases, actions or steps described in the claims may be performed in an order different from that in these embodiments, and may still implement desired results. In addition, the process described in the accompanying drawings does not necessarily follow the illustrated particular sequence or sequential sequence to implement the desired results. In some embodiments, multi-task processing and parallel processing are also acceptable or may be advantageous.

It should be understood that providing descriptions in a singular form in this specification or showing only one element in the accompanying drawings does not mean limiting a quantity of elements to one. In addition, the modules or elements described or shown in this specification as separate may be combined into a single module or element, and a single module or element described or shown in this specification may be split into a plurality of modules or elements.

It should also be understood that the terms and expressions used herein are intended only for description, and that one or more embodiments of this specification should not be limited to those terms and expressions. Use of these terms and expressions does not imply exclusion of equivalent features of any indication and description (or a part thereof), and it should be recognized that any possible modifications should also fall within the scope of the claims. Other modifications, changes, and replacements may also exist. Correspondingly, the claims shall be considered to cover all these equivalents.

## Claims

1. An electrochemical apparatus, wherein a negative electrode active material of the electrochemical apparatus comprises a first active material and a second active material, the first active material has a gram capacity less than the second active material, and the electrochemical apparatus comprises N cycle sections arranged in chronological order, with N being an integer greater than or equal to 2;
a discharge capacity in a single discharge process in an i-th cycle section is denoted as Qi, wherein 1 ≤ i < N, i being an integer; and
a discharge capacity in a single discharge process in an (i+1)-th cycle section is denoted as Qᵢ₊₁, wherein Qᵢ > Qᵢ₊₁.

2. The electrochemical apparatus according to claim 1, wherein
the i-th cycle section comprises two charge-discharge cycles: a j-th charge-discharge cycle and a (j+1)-th charge-discharge cycle, with j being an integer greater than or equal to 1; and
the electrochemical apparatus has a discharge cut-off voltage Vⱼ in the j-th charge-discharge cycle and a discharge cut-off voltage Vⱼ₊₁ in the (j+1)-th charge-discharge cycle, wherein Vⱼ > Vⱼ₊₁.

3. The electrochemical apparatus according to claim 1, wherein the electrochemical apparatus satisfies one of the following conditions:
a mass percentage of the second active material in the negative electrode active material is in the range of (0%, 10%], and a value range for the number of charge-discharge cycles comprised in the i-th cycle section is [100, 200]; or
a mass percentage of the second active material in the negative electrode active material is in the range of (10%, 60%], and a value range for the number of charge-discharge cycles comprised in the i-th cycle section is [10, 100).

4. The electrochemical apparatus according to claim 1, wherein the electrochemical apparatus satisfies one of the following conditions:
the mass percentage of the second active material in the negative electrode active material is in the range of (0%, 10%], and 0.02C ≤ Q; - Qᵢ₊₁ ≤ 0.1C, wherein C is an initial capacity of the electrochemical apparatus; or
the mass percentage of the second active material in the negative electrode active material is in the range of (10%, 60%], and 0.005C ≤ Qᵢ - Qᵢ₊₁ ≤ 0.02C.

5. The electrochemical apparatus according to claim 1, wherein
the first active material comprises at least one of a combination of graphite, soft carbon, hard carbon, carbon fiber, and meso-carbon microbeads; and/or
the second active material comprises at least one of a combination of silicon, silicon oxide compounds, silicon-carbon composites, and silicon alloys.

6. The electrochemical apparatus according to claim 5, wherein the first active material comprises graphite, and the second active material comprises silicon.

7. The electrochemical apparatus according to claim 6, wherein a mass percentage of silicon in the negative electrode active material of the electrochemical apparatus is within [10%, 20%].

8. A control method for electrochemical apparatus, for controlling the charge-discharge process of the electrochemical apparatus, wherein the negative electrode active material of the electrochemical apparatus comprises a first active material and a second active material; the first active material has a gram capacity less than the second active material; the electrochemical apparatus comprises N cycle sections arranged in chronological order, with N being an integer greater than or equal to 2; and the control method for electrochemical apparatus comprises:
controlling the electrochemical apparatus to perform charge-discharge cycles in the i-th cycle section with a discharge capacity of Qᵢ in a single discharge process, wherein 1 ≤ i < N, i being an integer; and
controlling the electrochemical apparatus to perform charge-discharge cycles in the (i+1)-th cycle section with a discharge capacity of Qᵢ₊₁ in a single discharge process, wherein Qᵢ > Qᵢ₊₁.

9. The control method for electrochemical apparatus according to claim 8, wherein the control method for electrochemical apparatus comprises:
for the j-th charge-discharge cycle and the (j+1)-th charge-discharge cycle comprised in a same cycle section, with j being an integer greater than or equal to 1, controlling a discharge cut-off voltage of the electrochemical apparatus in the j-th charge-discharge cycle to be Vⱼ and a discharge cut-off voltage of the electrochemical apparatus in the (j+1)-th charge-discharge cycle to be Vⱼ₊₁, wherein Vⱼ > Vⱼ₊₁.

10. The control method for electrochemical apparatus according to claim 8, wherein the control method for electrochemical apparatus comprises:
S1: controlling the electrochemical apparatus to perform charge-discharge cycles in the i-th cycle section with Qi;
S2: determining whether the number of charge-discharge cycles performed by the electrochemical apparatus with Qᵢ equals the number of charge-discharge cycles comprised in the i-th cycle section, if yes, executing S3, otherwise executing S4;
S3: controlling the electrochemical apparatus to start performing charge-discharge cycles with Qᵢ₊₁; and
S4: determining whether the discharge cut-off voltage of the electrochemical apparatus when performing charge-discharge cycles with Qᵢ is less than a voltage threshold; if yes, executing S3, otherwise executing S1.

11. The control method for electrochemical apparatus according to any one of claims 8 to 10, wherein the first active material comprises graphite, and the second active material comprises silicon.

12. The control method for electrochemical apparatus according to claim 11, wherein a mass percentage of silicon in the negative electrode active material of the electrochemical apparatus is within [10%, 20%].

13. An electrochemical apparatus management system, wherein the electrochemical apparatus management system is connected to an electrochemical apparatus, and the electrochemical apparatus management system is configured to execute the control method for electrochemical apparatus according to any one of claims 8 to 12.

14. An electronic device, comprising the electrochemical apparatus according to any one of claims 1 to 7 or the electrochemical apparatus management system according to claim 13.

15. A computer-readable storage medium, wherein the computer-readable storage medium has stored thereon a computer program, and when the computer program is executed by a processor, the control method for electrochemical apparatus according to any one of claims 8 to 12 is executed.
